# EUROPÄISCHE PATENTSCHRIFT

(11) **EP 2 029 413 B1**
(45) Veröffentlichungstag und Bekanntmachung des Hinweises auf die Patenterteilung: **24.04.2013**
(21) Anmeldenummer: 07721924.4
(22) Anmeldetag: 16.02.2007
(51) Int. Cl.: B62B 3/14, B62B 5/00

(54) **EINKAUFSWAGEN MIT TRANSPONDER**
SHOPPING TROLLEY WITH TRANSPONDER
CADDIE MUNI D'UN TRANSPONDEUR

(30) Priorität: 22.02.2006 DE 202006002938 U
(43) Veröffentlichungstag der Anmeldung: 04.03.2009
(73) Patentinhaber: Sonnendorfer, Horst, 82178 Puchheim (DE); Wieth, Franz, 82178 Puchheim (DE)
(72) Erfinder: Sonnendorfer, Horst, 82178 Puchheim (DE); Wieth, Franz, 82178 Puchheim (DE)
(74) Vertreter: Braun-Dullaeus, Karl-Ulrich
(86) Internationale Anmeldenummer: PCT/DE2007/000307
(87) Internationale Veröffentlichungsnummer: WO 2007/095908

(56) Entgegenhaltungen:
- WO-A-96/04161
- WO-A-98/55954
- WO-A-2006/087070
- WO-A2-2007/002941
- DE-A1- 19 935 537

## Beschreibung

### Technisches Gebiet

Die Erfindung betrifft die optisch lesbare Identifikation eines Transponders, wobei sich der Transponder in oder am Einkaufswagen befindet.

Eine optisch lesbare Identifikation des Transponders befindet sich zusätzlich am Einkaufswagen, um ohne technische Hilfsmittel erkennen zu können, welcher Transponder sich im Einkaufswagen befindet.

### Stand der Technik

Es ist aus dem durch öffentliche Vorbenutzung bekannten Stand der Technik offenbart, eine optisch lesbare Identifikation eines Transponders auf einer im wesentlichen waagrecht oder leicht schräg stehenden Oberfläche eines Einkaufswagens anzubringen.

Beim Stand der Technik wird vom Einkaufswagen diese optisch lesbare Identifikation an einer Kassenstation abgelesen und der Rechnung für die in diesem Einkaufswagen befindlichen Waren zugeordnet. Die Rechnungsdaten können mit Daten über die Bewegung des Einkaufswagens im Selbstbedienungsmarkt in Korrelation gebracht und ausgewertet werden.
Die Druckschrift WO 2007/002941 A2 offenbart einen Einkaufswagen mit Transponder, wobei eine optische lesbare Identifikation des Einkaufswagen am Einkaufswagen angebracht ist.

Nachteilig beim Stand der Technik ist die schlechte Ablesbarkeit der optisch lesbaren Identifikation durch die Person an der Kasse. Die Person an der Kasse muss üblicherweise aufstehen, um die auf der im wesentlichen waagrecht oder leicht schräg stehenden Oberfläche des Einkaufswagens angebrachte Identifikation ablesen zu können.

Dies ist unbequem und führt zu Verzögerungen an der Kasse.

### Offenbarung der Erfindung

### Technische Aufgabe

Es ist Aufgabe der Erfindung, den Stand der Technik so weiterzubilden, dass das Ablesen der Identifikation des Transponders von einer an der Kasse sitzenden Person schnell und bequem durchgeführt werden kann.

### Technische Lösung

Diese Aufgabe wird durch den Einkaufswagen des Anspruchs 1 gelöst.

Eine mögliche Ausführungsform sieht vor, dass die optisch lesbare Identifikation an einer im wesentlichen senkrecht stehenden Fläche am Einkaufswagen angebracht ist.

Die Neigung der Fläche, auf der die optisch lesbare Identifikation angebracht ist kann in dem Umfang variabel sein, als dann noch ein bequemes Ablesen möglich ist.

### Vorteilhafte Wirkungen

Durch die erfindungsgemäße Anordnung der optisch lesbaren Identifikation wird vorteilhaft erreicht, dass die an der Kasse sitzende Person die Identifikation des Transponders schnell und bequem lesen kann.

Bei der optisch lesbaren Identification kann es sich um alphanummerische Zeichen und/oder Strichcodes und/oder sonstige Codes handeln.

Die alphanummerischen Zeichen und/oder Strichcodes und/oder sonstige Codes sind auch durch geeignete Lesegeräte etwa den bekannten Handscannern lesbar.

### Kurze Beschreibung der Zeichnungen

Nachfolgend ist ein mögliches Ausführungsbeispiel der Erfindung anhand zweier Figuren näher erläutert.

### Ausführungsform(en) der Erfindung

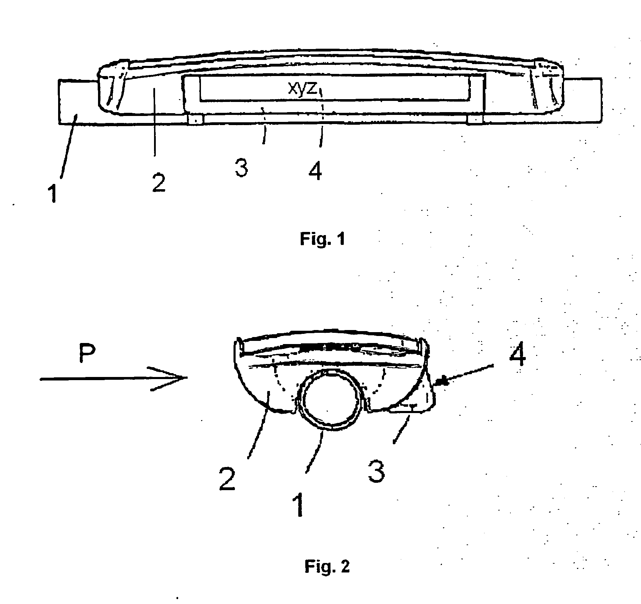

Die Figur 1 zeigt den Griff 1 eines nicht näher gezeigten Einkaufswagens. Auf dem Griff 1 ist ein Displayelement 2 befestigt, wie es aus der WO 03/057543 bekannt ist. Das Displayelement hat eine im wesentlichen senkrecht stehende Fläche 3. In einem Bereich 4 ist die optisch lesbare Identifikation eines dem Einkaufswagen zugeordneten Transponders "xyz" angebracht.

Der Bereich 4 ist durch eine transparente Abdeckung geschützt. So wird vorteilhaft vermieden, dass die Identifizierung unlesbar wird.

Die Figur 2 zeigt die aus Figur 1 bekannte Situation von der Seite. Der Pfeil P definiert die Fahrtrichtung des Einkaufswagens.

Das Displayelement 2 ist nun so am Griff 1 des Einkaufswagens angeordnet, dass die Fläche 3 mit der optisch lesbaren Identifikation "xyz" in Richtung Kasse zeigt, wenn der Kunden den Einkaufswagen zur Kasse schiebt.

Hierdurch ist vorteilhaft erreicht, dass die Person an der Kasse bereits von herannahenden Einkaufswagen die Identifikation des Transponders ablesen kann und diese vor dem Beginn der Warenerfassung in die Kasse eingeben kann.

### Gewerbliche Anwendbarkeit

Die Erfindung ist bei jedem beliebigen neu produzierten Einkaufswagen einsetzbar. Ebenso ist die Erfindung durch Nachrüsten eines bereits vorhandenen Einkaufswagens, etwa durch Montage des Displayelements 2 anwendbar.

## Patentansprüche

1. Einkaufswagen mit Transponder, wobei eine optisch lesbare Identifikation des Transponders am Einkaufswagen angebracht ist,
**dadurch gekennzeichnet, dass**
die eine optisch lesbare Identifikation des Transponders an einer Fläche (3) des Einkaufswagens oder eines mit dem Einkaufswagen verbundenen Zubehörteils (2) angebracht ist, an welcher die Identifikation von einer an einer Kasse sitzenden Person ohne technische Hilfsmittel ablesbar ist, um zu identifizieren, welcher Transponder sich am Einkaufswagen befindet.

2. Einkaufswagen nach Anspruch 1
**dadurch gekennzeichnet, dass**
die Fläche im wesentlichen senkrecht oder leicht geneigt angeordnet ist.

3. Einkaufswagen nach Anspruch 1 oder 2
**dadurch gekennzeichnet, dass**
die Fläche in Fahrtrichtung (P) des Einkaufswagens zeigt.

4. Einkaufswagen nach einem der vorangegangenen Ansprüche
**dadurch gekennzeichnet, dass**
die Fläche (3) nachträglich am Einkaufswagen anbringbar ist.

5. Einkaufswagen nach einem der vorangegangenen Ansprüche
**dadurch gekennzeichnet, dass**
die Fläche (3) an einem Displayelement vorgesehen ist und das Displayelement noch weitere Flächen hat, auf denen Werbung anbringbar ist.

6. Einkaufswagen nach einem der vorangegangenen Ansprüche
**dadurch gekennzeichnet, dass**
die Fläche (3) durch eine Sichtscheibe (4) abdeckbar und vor Umwelteinflüssen schützbar ist.

## Claims

1. A shopping trolley with transponder, wherein an optically readable identification of the transponder is fitted to the shopping trolley, **characterised in that** the optically readable identification of the transponder is fitted to a surface (3) of the shopping trolley or an accessory part (2) connected with the shopping trolley, from which surface the identification can be read by a person sitting at the checkout without any technical aids, in order to identify which transponder is located at the shopping trolley.

2. The shopping trolley according to claim 1, **characterised in that** the surface is arranged in an essentially vertical or slightly inclined manner.

3. The shopping trolley according to claim 1 or 2, **characterised in that** the surface points in driving direction (P) of the shopping trolley.

4. The shopping trolley according to one of the preceding claims, **characterised in that** the surface (3) can be subsequently fitted to the shopping trolley.

5. The shopping trolley according to one of the preceding claims, **characterised in that** the surface (3) is provided on a display element and **in that** the display element comprises further surfaces, to which advertising can be applied.

6. The shopping trolley according to one of the preceding claims, **characterised in that** the surface (3) can be covered by a transparent screen (4) and be protected against environmental influences.

## Revendications

1. Caddie avec un transpondeur, une identification du transpondeur pouvant être lue de manière optique étant apposée sur le caddie,
**caractérisé en ce que** cette identification du transpondeur pouvant être lue de manière optique est apposée sur une surface (3) du caddie ou d'un accessoire (2) relié au caddie, sur laquelle l'identification peut être lue par une personne assise à une caisse sans moyens d'aide technique afin d'identifier quel transpondeur se trouve sur le caddie.

2. Caddie selon la revendication 1, **caractérisé en ce que** la surface est disposée essentiellement de manière perpendiculaire ou légèrement inclinée.

3. Caddie selon la revendication 1 ou 2, **caractérisé en ce que** la surface est orientée dans le sens de la marche (P) du caddie.

4. Caddie selon l'une des revendications précédentes, **caractérisé en ce que** la surface (3) peut être apposée sur le caddie ultérieurement.

5. Caddie selon l'une des revendications précédentes, **caractérisé en ce que** la surface (3) est prévue sur un élément d'affichage et **en ce que** l'élément d'affichage possède encore d'autres surfaces sur lesquelles il est possible d'apposer de la publicité.

6. Caddie selon l'une des revendications précédentes, **caractérisé en ce que** la surface (3) peut être recouverte par une vitre (4) et être protégée des influences de l'environnement.
